# EUROPÄISCHE PATENTSCHRIFT

(11) **EP 2 212 666 B1**
(45) Veröffentlichungstag und Bekanntmachung des Hinweises auf die Patenterteilung: **14.09.2011**
(21) Anmeldenummer: 08853297.3
(22) Anmeldetag: 20.11.2008
(51) Int. Cl.: G01K 17/00, G01N 25/26, G01N 25/44

(54) **KALORIMETER MIT EINEM AUFSCHLUSSBEHÄLTER UND MIT EINEM WASSERMANTEL**
CALORIMETER WITH A DIGESTION CONTAINER AND WITH A WATER JACKET
CALORIMÈTRE COMPORTANT UN CONTENANT DE DISSOLUTION ET UNE CHEMISE D'EAU

(30) Priorität: 29.11.2007 DE 102007057463
(43) Veröffentlichungstag der Anmeldung: 04.08.2010
(73) Patentinhaber: IKA - Werke GmbH & Co. KG, 79219 Staufen (DE)
(72) Erfinder: PINHACK, Hubert, 79189 Bad Krozingen (DE)
(74) Vertreter: Maucher, Wolfgang
(86) Internationale Anmeldenummer: PCT/EP2008/009818
(87) Internationale Veröffentlichungsnummer: WO 2009/068219

(56) Entgegenhaltungen:
- DE-C1- 10 024 147
- DE-C1- 19 542 138
- GB-A- 2 089 507
- US-A- 4 616 938
- US-A1- 2005 008 063

## Beschreibung

Die Erfindung betrifft ein Kalorimeter mit einem einen Brennraum enthaltenden Aufschlussbehälter, in welchem eine Aufnahmevorrichtung für eine Probe und eine Zündvorrichtung sowie wenigstens eine Zuleitung für Sauerstoff vorgesehen sind, mit einem den Aufschlussbehälter umgebenden Wassermantel oder Flüssigkeitsmantel, einem in den Wasser- oder Flüssigkeitsmantel ragenden Temperaturfühler und mit einem den Wasser- oder Flüssigkeitsmantel umfassenden Außenbehälter.

Derartige Kalorimeter sind in vielfältiger Form, beispielsweise aus der DE 43 14 454 C1 oder der DE 100 24 147 C1, bekannt. Damit der bei der Verbrennung einer Probe entstehende Innendruck nicht zu einer Zerstörung führt, muss der den Brennraum enthaltende Aufschlussbehälter einen dicken und stabilen Mantel haben und darüber hinaus aus hochwertigem Werkstoff bestehen, damit er die Verbrennung nicht stören oder beeinflussen kann und nicht selbst beschädigt wird.

In der Praxis hat sich gezeigt, dass für eine kalorimetrische Messung im Regelfall etwa zwanzig Minuten an Zeit benötigt werden, weil zunächst die entsprechende Wärme durch den dickwandigen Aufschlussbehälter in den Wassermantel übergehen und sich dort verteilen muss. Gleichzeitig sind vorbekannte Kalorimeter relativ aufwendig und entsprechend teuer, weil außerhalb der das Wasser oder die Flüssigkeit enthaltenden Gefäßwand noch eine Isolierung erforderlich ist, um Umgebungseinflüsse auf das Messergebnis zumindest weitestgehend auszuschließen.

DE10024147 und US2005/0008063 erkennen das Problem der hohen Masse und der entsprechenden Wärmeträgheit von bekannten Kalorimetern mit Druckbehältern, und somit der langen benötigten Zeit für die Messungen. DE10024147 löst dieses Problem durch ein Temperieren des Wassermantels. US2005/0008063 offenbart, dass zur Verkürzung der Messungszeit Wände dünner gemacht werden können, sowie die Benutzung eines äußeren Druckbehälter.

GB2089507, US4616938 und DE19542138 offenbaren weitere bekannte ähnliche Kalorimeter.

Es besteht deshalb die Aufgabe, ein Kalorimeter der eingangs genannten Art zu schaffen, bei welchem vor allem die Zeit zur Durchführung einer Messung möglichst kurz ist.

Zur Lösung dieser Aufgabe ist bei dem eingangs definierten Kalorimeter vorgesehen, dass der Außenbehälter als Druckbehälter ausgebildet ist und den bei einer Verbrennung in dem drucknachgebenden Aufschlussbehälter an dessen Wandung entstehenden Druck über den Wasser- oder Flüssigkeitsmantel, im Folgenden der Einfachheit halber "Wassermantel" genannt, aufnimmt und dass zum Ausgleich von Wärmebewegungen und Druckunterschieden die Wandung des Aufschlussbehälters mit seinem Boden über einen dichten drucknachgebenden Schiebesitz verbunden oder an dem Aufschlussbehälter eine Membran, ein Balg oder ein beweglicher Kolben angeordnet ist.

Durch eine derartige Anordnung ist es möglich, den den Brennraum enthaltenden Aufschlussbehälter dünnwandig zu gestalten, weil der bei der Verbrennung in diesem drucknachgebenden, gegebenenfalls sein Volumen ändernden Aufschlussbehälter entstehende Druck über die inkompressible Flüssigkeit beziehungsweise das inkompressible Wasser zu dem außenliegenden Druckbehälter geleitet und von diesem aufgenommen wird, so dass der Wärmeübergang aus dem Aufschlussbehälter in das Wasser entsprechend schnell stattfinden kann. Entsprechend wenig Zeit benötigt der Messvorgang. Gleichzeitig wird für das Aufschlussgefäß weniger von dem relativ teuren Material benötigt.

Somit ermöglicht die Erfindung, dass der Aufschlussbehälter im Verhältnis zu dem außenliegenden Druckbehälter dünnwandig ausgebildet und seine Wandstärke geringer als die Wandstärke des Druckbehälters ist.

Eine zweckmäßige Ausgestaltung der Erfindung kann vorsehen, dass die Innenseite der Wandung des Druckbehälters zur Isolation gegen äußere Einflüsse und zur Verringerung des Energietransports vom Ausschlussgefäß über die ihn umgebende inkompressible Flüssigkeit oder das Wasser zu oder in den Druckbehälter mit einer Isolation versehen ist. Dadurch kann erreicht werden, dass zwar die Flüssigkeit oder das Wasser, nicht aber der Druckbehälter aufgewärmt wird, was die Messung verfälschen könnte. Der Druckbehälter kann also zwar den bei der Verbrennung einer Probe auftretenden Druck auffangen, wird aber selbst nur gering erwärmt und hält zusammen mit der an seiner Innenseite befindlichen Isolation äußere Einflüsse von dem Wassermantel fern, so dass daher rührende Verfälschungen des Messergebnisses zumindest weitgehend vermieden werden.

Günstig ist es dabei, wenn die Isolation ein Isolierbehälter ist. Dieser kann in einfacher und zweckmäßiger Weise vorgefertigt und dann in den Außenbehälter eingefügt werden.

Eine zweckmäßige Ausgestaltung vor allem der Isolation kann vorsehen, dass diese Isolation oder der Isolierbehälter von der Innenseite des Druckbehälters beabstandet ist oder die Innenseite des Druckbehälters nur stellenweise berührt. Dadurch kann zwischen dem Druckbehälter und der Isolation noch ein Isolierraum freigehalten bleiben, der die Isolierwirkung verbessert.

Zwischen Druckbehälter und Isolation oder Isolierbehälter können Abstandhalter und/oder an einem oder beiden Behälters angeordnete Verformungen wie Rippen, Noppen oder dergleichen vorgesehen sein. Dadurch kann der auch auf die Isolation wirkende Druck bei der Verbrennung einer Probe besser auf den Außen- oder Druckbehälter übertragen werden. Gleichzeitig können diese Abstandhalter hinsichtlich Querschnitt und Abmessung so gering bemessen werden, dass keine nennenswerten Wärmemengen darüber übertragen werden können.

Zumindest der Aufschlussbehälter kann aus einem temperatur- und/oder chemisch beständigen Werkstoff, zum Beispiel aus Metall, Keramik und/oder Kunststoff, bestehen. Selbst Kunststoff ist möglich, weil der Aufschlussbehälter selbst keinen Druck aufnehmen können muss, sondern diesen über den Wassermantel an den äußeren Druckbehälter überträgt.

Der Druckbehälter und/oder der Isolierbehälter können aus Metall, Keramik und/oder Kunststoff bestehen. Dabei kann die Materialwahl danach getroffen werden, welche Proben in der Regel darin verbrannt und untersucht werden sollen.

Eine weitere Ausgestaltung der Erfindung kann vorsehen, dass an der Außenseite des Druckbehälters eine Isolierung oder Isolierhülle angeordnet ist. Dies kann zur Verbesserung des Ausschaltens von äußeren Einflüssen dienen. Außerdem kann dadurch ein Isolierbehälter innerhalb des Druckbehälters vermieden oder eingespart werden.

In dem von der inkompressiblen Flüssigkeit oder dem Wasser bei Gebrauch ausgefüllten Raum zwischen Aufschlussgefäß und Druckbehälter kann wenigstens ein Mittel zum Bewegen der Flüssigkeit oder ein Rührer vorgesehen sein. Dadurch kann die Verteilung der bei der Verbrennung einer Probe auftretenden Wärme beschleunigt werden.

Besonders günstig ist es, wenn in dem bei Gebrauch von der inkompressiblen Flüssigkeit oder dem Wasser ausgefüllten Raum des Kalorimeters ein Magnetrührer vorgesehen oder angeordnet ist.

Die zum schnellen Wärmeausgleich durchzuführende Flüssigkeitsumwälzung in diesem Raum oder Zwischenraum kann also mit dem magnetisch antreibbaren und bewegbaren Teil eines Magnetrührers erfolgen. Dadurch ist die Umwälzbewegung bei den durch die Verbrennung entstehenden hohen Drücken ohne eine Durchführung wie eine Welle oder dergleichen nach außen möglich. Ferner wird die den kalorimetrischen Prozess beeinflussende Wärmeentwicklung durch Gleitreibung einer solchen Welle, die eine gegen Hochdruck wirksame Dichtung benötigt, vermieden.

In dem zwischen dem Aufschlussbehälter und dem Druckbehälter angeordneten, bei Gebrauch Wasser oder eine inkompressible Flüssigkeit aufnehmenden Zwischenraum kann gegebenenfalls mehr als ein Temperaturmessfühler vorgesehen sein, wobei diese mehreren Temperaturmessfühler vorzugsweise gleichmäßig verteilt sein können. Dadurch kann die Messgeschwindigkeit und die Messgenauigkeit gesteigert werden.

Zur Energiebilanzierung können an der Außenseite des Druckbehälters ein oder mehrere Temperaturmessfühler angeordnet sein. Somit kann überprüft werden, ob und wie viel Wärme eventuell auch durch den Druckbehälter ausgetreten ist oder welche Temperaturdifferenz zwischen den beiden Seiten der Wandung des Druckbehälters besteht.

Eine weitere Ausgestaltung der Erfindung kann vorsehen, dass an dem Druckbehälter eine Temperiereinrichtung zum Einstellen einer konstanten Temperatur dieses Druckbehälters vorgesehen ist. Dadurch kann erreicht werden, dass äußere Einflüsse bei der Messung ausgeschaltet sind.

Die Form des Brennraumes innerhalb des Aufschlussbehälters kann beliebig sein und zumindest über einen Teilbereich gewölbt oder über die gesamte Höhe zylindrisch oder als Balg ausgeführt sein, um eine platzsparende Form zu erlauben, wobei aber auf Druckfestigkeit nicht geachtet werden muss, weil der Druck in vorteilhafterweise über den Flüssigkeitsmantel auf den als Druckbehälter dienenden Außenbehälter übertragen wird.

Vor allem bei Kombination einzelner oder mehrere der vorbeschriebenen Merkmale und Maßnahmen ergibt sich insbesondere dadurch, dass der bei der Verbrennung einer Probe entstehende Druck von dem Behälter aufgefangen wird, der auch den Wasser- oder Flüssigkeitsmantel außenseitig begrenzt, kann das gesamte Kalorimeter platzsparend, also mit einem deutlich geringeren Gesamtvolumen als bisherige gebräuchliche Kalorimeter hergestellt werden. Entsprechend leicht und einfach ist sein Transport und entsprechend schnell können auch an unterschiedlichen Stellen oder Orten kurzfristig kalorimetrische Messungen durchgeführt werden. Dabei kann wegen der Inkompressibilität der Flüssigkeit schon eine geringe Drucknachgiebigkeit oder gegebenenfalls eine geringe Dehnbarkeit des Aufschlussbehälters ausreichen.

Nachstehend sind Ausführungsbeispiele der Erfindung anhand der Zeichnung näher beschrieben. Es zeigt in stark schematisierter Darstellung:
- Fig. 1: einen senkrechten Schnitt durch ein erstes Aus- führungsbeispiel eines erfindungsgemäßen Kalorimeters und
- Fig. 2: eine der Fig. 1 entsprechende Darstellung eines zweiten Ausführungsbeispiels des erfindungsgemäßen Kalorimeters.

In der nachfolgenden Beschreibung zweier Ausführungsbeispiele erhalten in ihrer Funktion übereinstimmende Teile auch bei abgewandelter Formgebung übereinstimmende Bezugszahlen.

Ein im Ganzen mit 1 bezeichnetes Kalorimeter dient zum Messen der Verbrennungswärme von Stoffen und weist dazu einen einen Brennraum 2 enthaltenden Aufschlussbehälter 3 auf, in welchem eine Aufnahmevorrichtung 4 für eine derartige Probe und eine Zündvorrichtung 5 sowie eine Zuleitung 6 für Sauerstoff vorgesehen sind.

Der Aufschlussbehälter 3 befindet sich dabei in üblicher Weise in einem Wasserbad, das heißt er ist von einem Wassermantel 7 umgeben, wobei anstelle von Wasser auch eine sonstige inkompressible Flüssigkeit vorgesehen sein könnte. Die Zuleitung 7a zu dem Wassermantel 7 ist im Bodenbereich vorgesehen.

In diesen Wassermantel 7 oder Flüssigkeitsmantel ragt ein Temperaturmessfühler 8, um die bei der Verbrennung einer Probe auftretende Erwärmung zu messen. Ferner ist ein den Wasser- oder Flüssigkeitsmantel 7 umfassender Außenbehälter 9 vorgesehen.

Um möglichst kurze Messzeiten und gleichzeitig auch vergleichsweise geringe Abmessungen zu erreichen, ist der Außenbehälter 9 als Druckbehälter ausgebildet und nimmt den bei einer Verbrennung in dem Aufschlussbehälter 3 an dessen Wandung 10 entstehenden Druck über den Flüssigkeits- oder Wassermantel 7 auf, so dass die Wandung 10 eine relativ geringe Dicke haben kann, die den Wärmedurchgang entsprechend wenig beeinflusst.

In den Figuren erkennt man, dass der Aufschlussbehälter 3 im Verhältnis zu dem außenliegenden, als Druckbehälter ausgebildeten Außenbehälter 9 dünnwandig ausgebildet ist, wobei die Wandstärke des Aufschlussbehälters 3 deutlich geringer als die Wandstärke des Außen- oder Druckbehälters 9, im Folgenden auch "Druckbehälter 9" genannt, ist.

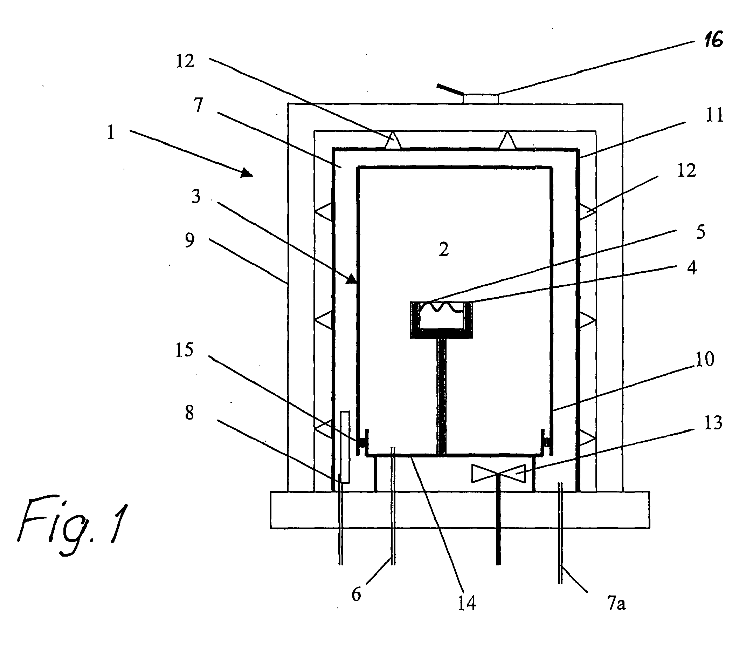

Im Ausführungsbeispiel gemäß Fig. 1 ist die Innenseite der Wandung des Druckbehälters 9 zur Isolation gegen äußere Einflüsse, die die Messgenauigkeit stören könnten, und zur Verringerung des Energietransports vom Aufschlussbehälter 3 über das ihn umgebende Wasser des Wassermantels 7 in den Druckbehälter 9 mit einer Isolation versehen, die im Ausführungsbeispiel ein Isolierbehälter 11 ist, der also den Wassermantel 7 enthält. Man erkennt deutlich, dass die Isolation, also der Isolierbehälter 11, von der Innenseite des Druckbehälters 9 beabstandet ist und die Innenseite des Druckbehälters 9 nur stellenweise über Abstandhalter 12 berührt. Der dadurch zwischen Isolierbehälter 11 und Außenbehälter 9 gebildete Abstand kann die Isolation verstärken.

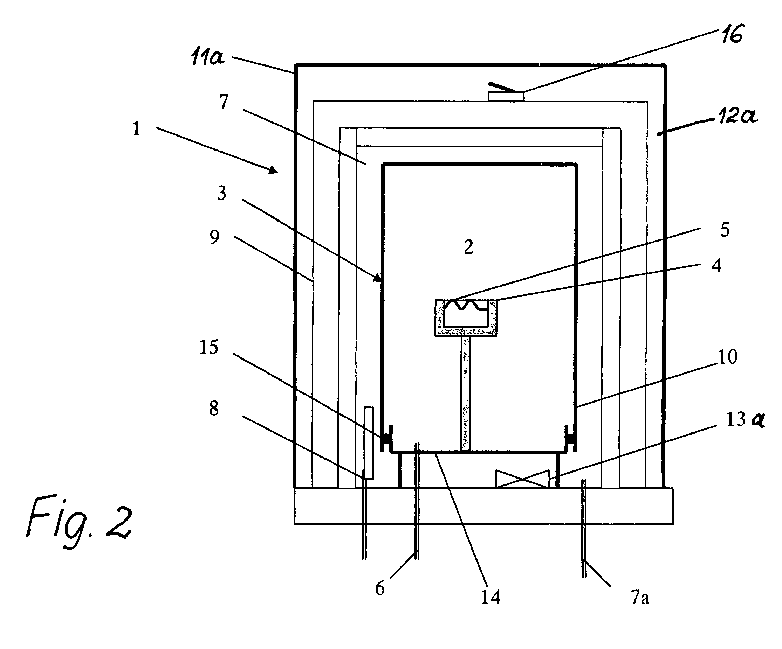

Im Ausführungsbeispiel gemäß Fig. 2 ist vorgesehen, dass an der Außenseite des Druckbehälters 9 eine Isolierung oder Isolierhülle 11a angeordnet ist, so dass ein Isolierbehälter 11 innerhalb des Druckbehälters 9 entfallen kann. Dabei erkennt man zwischen dieser Isolierhülle 11a und dem Druckbehälter 9 einen Luftspalt 12a, der zusammen mit der Isolierhülle 11a die äußere Isolierung bildet. Dadurch kann eine Energietransport von dem Druck- oder Außenbehälter 9 an die Umgebung verringert werden.

Es sei erwähnt, dass zumindest der Aufschlussbehälter 3, zweckmäßigerweise aber auch der Druckbehälter 9 und gegebenenfalls der Isolierbehälter 11 aus einem temperatur- und/oder chemisch beständigen Werkstoff, zum Beispiel aus Metall, Keramik und/oder Kunststoff bestehen können, wodurch Gewicht gespart wird. In nicht dargestellter Weise könnte an der Außenseite des Druckbehälters 9 eine Isolierung oder Isolierhülle angeordnet sein, um äußere Einflüsse noch besser zu vermeiden. In dem von der inkompressiblen Flüssigkeit oder dem Wasser bei Gebrauch ausgefüllten Raum, also in dem Wassermantel 7 ist im Ausführungsbeispiel gemäß Fig. 1 ein Mittel zum Bewegen der Flüssigkeit oder des Wassers, nämlich ein Rührer 13 vorgesehen, mit welchem das Wasser entsprechend bewegt und dadurch die darin herrschende oder erhöhte Temperatur schnell und gleichmäßig verteilt werden kann.

Auch im Ausführungsbeispiel gemäß Fig. 2 ist in dem von der inkompressiblen Flüssigkeit oder dem Wasser bei Gebrauch ausgefüllten Raum, also in dem Wassermantel 7 ein Mittel zum Bewegen der Flüssigkeit oder des Wassers, in diesem Falle ein Magnetrührer 13a, vorgesehen, mit welchem die Flüssigkeit oder das Wasser ebenfalls bewegt und dadurch die darin herrschende oder erhöhte Temperatur schnell und gleichmäßig verteilt werden kann. Im Gegensatz zum Ausführungsbeispiel nach Fig. 1 wird jedoch keine Antriebswelle für das eigentliche Rührerelement benötigt, weil der Magnetrührer 13 in bekannter Weise über eine magnetische Kupplung berührungslos angetrieben werden kann.

Eventuell könnte auch mehr als ein Temperaturmessfühler 8 vorgesehen sein, um die Temperaturänderung schneller und dabei eventuell auftretende Temperaturunterschiede erfassen zu können.

Es sei noch erwähnt, dass zum Ausgleich von Wärmebewegungen und Druckunterschieden die Wandung 10 des Aufschlussbehälters 3 mit dessen Boden 14 über einen dichten Schiebesitz 15 verbunden ist. Der Druckausgleich kann auch durch eine am Aufschlussgefäß angeordnete Membran, einen Balg oder einen beweglichen Kolben erfolgen.

Zur Energiebilanzierung kann an der Außenseite des Druckbehälters 9 ein weiterer Temperaturmessfühler 16 angeordnet werden, der dabei im Ausführungsbeispiel an der Oberseite vorgesehen ist. In nicht näher dargestellter Weise könnte an dem Druckbehälter 9 noch eine Temperiereinrichtung zum Einstellen einer konstanten Temperatur des Druckbehälters 9 vorgesehen sein, um äußere Einflüsse auf das Messergebnis auszuschließen.

Das Kalorimeter 1 weist einen Aufschlussbehälter 3 mit Brennraum 2 auf, in welchem eine Aufnahmevorrichtung 4 für eine Probe und eine Zündvorrichtung 5 sowie wenigstens eine Zuleitung 6 für Sauerstoff vorgesehen sind. Der Aufschlussbehälter 3 ist von einem Flüssigkeits- oder Wassermantel 7 umgeben, in welchen wenigstens ein Temperaturmessfühler 8 ragt. Der Flüssigkeits- oder Wassermantel 7 wird von einem Außenbehälter 9 umfasst, der als Druckbehälter ausgebildet ist und den bei der Verbrennung einer Probe in dem Aufschlussbehälter 3 an dessen Wandung 10 entstehenden Druck bedingt durch den dichten Schiebesitz 15 über das Wasser oder die inkompressible Flüssigkeit aufnimmt. Entsprechend dünnwandig kann der Aufschlussbehälter 3 ausgebildet sein, so dass die bei der Verbrennung einer Probe entstehende Wärme entsprechend schnell zu dem oder den Temperaturmessfühlern 8 gelangt.

## Patentansprüche

1. Kalorimeter (1) mit einem einen Brennraum (2) enthaltenden Aufschlussbehälter (3), in welchem eine Aufnahmevorrichtung (4) für eine Probe und eine Zündvorrichtung (5) sowie wenigstens eine Zuleitung (6) für Sauerstoff vorgesehen sind, mit einem den Aufschlussbehälter (3) umgebenden Flüssigkeits- oder Wassermantel (7), mit wenigstens einem in den Flüssigkeits- oder Wassermantel (7) ragenden Temperaturmessfühler (8) und mit einem den Flüssigkeits- oder Wassermantel (7) umfassenden Außenbehälter (9), **dadurch gekennzeichnet, dass** der Außenbehälter (9) als Druckbehälter ausgebildet ist und den bei einer Verbrennung in dem drucknachgebenden Aufschlussbehälter (3) an dessen Wandung (10) entstehenden Druck über den Flüssigkeits- oder Wassermantel (7) aufnimmt und dass zum Ausgleich von Wärmebewegungen und Druckunterschieden die Wandung (10) des Aufschlussbehälters (3) mit seinem Boden (14) über einen dichten drucknachgebenden Schiebesitz (15) verbunden oder an dem Aufschlussbehälter (3) eine Membran, ein Balg oder ein beweglicher Kolben angeordnet ist.

2. Kalorimeter nach Anspruch 1, **dadurch gekennzeichnet, dass** der Aufschlussbehälter (3) im Verhältnis zu dem außenliegenden Druckbehälter dünnwandig ausgebildet und seine Wandstärke geringer als die Wandstärke des Druckbehälters (9) ist.

3. Kalorimeter nach Anspruch 1 oder 2, **dadurch gekennzeichnet, dass** die Innenseite der Wandung des Druckbehälters (9) zur Isolation gegen äußere Einflüsse und zur Verringerung des Energietransports vom Aufschlussbehälter (3) über das ihn umgebende Wasser in den Druckbehälter (9) mit einer Isolation versehen ist.

4. Kalorimeter nach dem Anspruch 3, **dadurch gekennzeichnet, dass** die Isolation des Druckbehälters (9) ein Isolierbehälter (11) ist.

5. Kalorimeter nach einem der Ansprüche 3 oder 4, **Dadurch gekennzeichnet, dass** die Isolation oder der Isolierbehälter (11) von der Innenseite des Druckbehälters (9) beabstandet ist und/oder die Innenseite des Druckbehälters (9) nur stellenweise berührt.

6. Kalorimeter nach einem der Ansprüche 3 bis 5, **dadurch gekennzeichnet, dass** zwischen Druckbehälter (9) und Isolation oder Isolierbehälter (11) Abstandhalter (12) und/oder an einem oder beiden Behältern angeordnete Verformungen wie Rippen, Noppen vorgesehen sind.

7. Kalorimeter nach einem der Ansprüche 1 bis 6, **dadurch gekennzeichnet, dass** zumindest der Aufschlussbehälter (3) aus einem temperatur- und/oder chemisch beständigen Werkstoff, zum Beispiel aus Metall, Keramik und/oder Kunststoff, besteht.

8. Kalorimeter nach einem der Ansprüche 1 bis 7, **dadurch gekennzeichnet, dass** der Druckbehälter (9) und/oder der Isolierbehälter (11) aus Metall, Keramik und/oder Kunststoff bestehen.

9. Kalorimeter nach einem der Ansprüche 1 bis 8, **dadurch gekennzeichnet, dass** an der Außenseite des Druckbehälters (9) eine Isolierung oder Isolierhülle angeordnet ist.

10. Kalorimeter nach einem der Ansprüche 1 bis 9, **dadurch gekennzeichnet, dass** in dem von der inkompressiblen Flüssigkeit oder dem Wasser bei Gebrauch ausgefüllten Raum wenigstens ein Mittel zum Bewegen der Flüssigkeit oder ein Rührer (13) vorgesehen ist.

11. Kalorimeter nach einem der Ansprüche 1 bis 10, **dadurch gekennzeichnet, dass** in dem bei Gebrauch von der inkompressiblen Flüssigkeit oder dem Wasser ausgefüllten Raum (7) ein Magnetrührer vorgesehen ist.

12. Kalorimeter nach einem der Ansprüche 1 bis 11, **dadurch gekennzeichnet, dass** in dem zwischen dem Aufschlussbehälter (3) und dem Druckbehälter (9) angeordneten, bei Gebrauch Wasser oder eine inkompressible Flüssigkeit aufnehmenden Zwischenraum mehr als ein Temperaturmessfühler (8), insbesondere gleichmäßig verteilt, vorgesehen sind.

13. Kalorimeter nach einem der Ansprüche 1 bis 12, **dadurch gekennzeichnet, dass** zur Energiebilanzierung an der Außenseite des Druckbehälters (9) ein oder mehrere Temperaturmessfühler (16) angeordnet sind.

14. Kalorimeter nach einem der Ansprüche 1 bis 13, **dadurch gekennzeichnet, dass** an dem Druckbehälter (9) wenigstens eine Temperiereinrichtung zum Einstellen einer konstanten Temperatur dieses Druckbehälters (9) vorgesehen ist.

## Claims

1. Calorimeter (1) comprising a decomposition vessel (3) which contains a combustion chamber (2) and in which a receiving device (4) for a sample and an ignition device (5) as well as at least one feed line (6) for oxygen are provided, comprising a fluid or water jacket (7) surrounding the decomposition vessel (3), comprising at least one temperature sensor (8) projecting into the fluid or water jacket (7), and comprising an outer vessel (9) including the fluid or water jacket (7), **characterised in that** the outer vessel (9) is formed as a pressure vessel and, via the fluid or water jacket (7), absorbs the pressure produced on the wall (10) of the pressure-yielding decomposition vessel (3) during combustion therein, and **in that** the wall (10) of the decomposition vessel (3) is connected to the base (14) thereof via a tight, pressure-yielding sliding fit (15) or a diaphragm, a bellows or a movable piston is arranged on the decomposition vessel (3) to compensate for movements due to heat and for pressure differences.

2. Calorimeter according to claim 1, **characterised in that** the decomposition vessel (3) is formed with a thin wall compared to the outer pressure vessel and the wall thickness of said decomposition vessel is less than the wall thickness of the pressure vessel (9).

3. Calorimeter according to either claim 1 or claim 2, **characterised in that** the inner face of the wall of the pressure vessel (9) is provided with insulation to insulate it from external influences and to reduce energy transport from the decomposition vessel (3) into the pressure vessel (9) via the water surrounding said decomposition vessel.

4. Calorimeter according to claim 3, **characterised in that** the insulation of the pressure vessel (9) is an insulating vessel (11).

5. Calorimeter according to either claim 3 or claim 4, **characterised in that** the insulation or the insulating vessel (11) is at a distance from the inner face of the pressure vessel (9) and/or contacts the inner face of the pressure vessel (9) only in some places.

6. Calorimeter according to any one of claims 3 to 5, **characterised in that** spacers (12) and/or deformations such as ribs or knobs which are arranged on one or both of the vessels are provided between the pressure vessel (9) and the insulation or insulating vessel (11).

7. Calorimeter according to any one of claims 1 to 6, **characterised in that** at least the decomposition vessel (3) consists of a temperature-resistant and/or chemically resistant material, for example metal, ceramics and/or plastics material.

8. Calorimeter according to any one of claims 1 to 7, **characterised in that** the pressure vessel (9) and/or the insulating vessel (11) consists of metal, ceramics, or plastics material.

9. Calorimeter according to any one of claims 1 to 8, **characterised in that** an insulation or insulating cover is arranged on the outer face of the pressure vessel (9).

10. Calorimeter according to any one of claims 1 to 9, **characterised in that** at least one means for moving the fluid, or a stirrer (13), is provided in the space which is filled by the incompressible fluid or the water during use.

11. Calorimeter according to any one of claims 1 to 10, **characterised in that** a magnetic stirrer is provided in the space (7) which is filled by the incompressible fluid or the water during use.

12. Calorimeter according to any one of claims 1 to 11, **characterised in that** more than one temperature sensor (8) is provided in particular uniformly distributed, in the space which is arranged between the decomposition vessel (3) and the pressure vessel (9) and which holds water or an incompressible fluid during use.

13. Calorimeter according to any one of claims 1 to 12, **characterised in that** one or more temperature sensors (16) is/are arranged on the outer face of the pressure vessel (9) to balance energy.

14. Calorimeter according to any one of claims 1 to 13, **characterised in that** at least one temperature control means is provided on the pressure vessel (9) to set a constant temperature for said pressure vessel (9).

## Revendications

1. Calorimètre (1) avec un réservoir de dissolution (3) contenant une chambre de combustion (2), dans lequel sont prévus un dispositif de réception (4) pour un échantillon et un dispositif d'allumage (5) ainsi qu'au moins une conduite d'amenée (6) pour de l'oxygène, avec une chemise de liquide ou d'eau (7) entourant le réservoir de dissolution (3), avec au moins une sonde de mesure de température (8) pénétrant dans la chemise de liquide ou d'eau (7) et avec un réservoir extérieur (9) entourant la chemise de liquide ou d'eau (7), **caractérisé en ce que** le réservoir extérieur (9) est réalisé sous la forme d'un réservoir de pression qui absorbe la pression qui se crée lors d'une combustion dans le réservoir de dissolution (3) peu résistant à la pression sur la paroi (10) de celui-ci par l'intermédiaire de la chemise de liquide ou d'eau (7) et que pour compenser les mouvements thermiques et les différences de pression, la paroi (10) du réservoir de dissolution (3) est reliée à son fond (14) par l'intermédiaire d'un ajustement glissant (15) étanche, peu résistant à la pression, ou une membrane, un soufflet ou un piston mobile est disposé(e) sur le réservoir de dissolution (3).

2. Calorimètre selon la revendication 1, **caractérisé en ce que** le réservoir de dissolution (3) est réalisé avec une paroi mince par rapport au réservoir de pression extérieur et son épaisseur de paroi est inférieure à l'épaisseur de paroi du réservoir de pression (9).

3. Calorimètre selon la revendication 1 ou 2, **caractérisé en ce que** le côté intérieur de la paroi du réservoir de pression (9) est muni d'une isolation pour l'isolation contre les influences extérieures et pour diminuer le transport d'énergie du réservoir de dissolution (3) dans le réservoir de pression (9) par l'intermédiaire de l'eau qui l'entoure.

4. Calorimètre selon la revendication 3, **caractérisé en ce que** l'isolation du réservoir de pression (9) est un réservoir isolant (11).

5. Calorimètre selon une des revendications 3 ou 4, **caractérisé en ce que** l'isolation ou le réservoir isolant (11) est espacé du côté intérieur du réservoir de pression (9) et/ou ne touche le côté intérieur du réservoir de pression (9) que par endroits.

6. Calorimètre selon une des revendications 3 à 5, **caractérisé en ce qu'**il est prévu des entretoises (12) entre réservoir de pression (9) et isolation ou réservoir isolant (11) et/ou des déformations telles que nervures, bossages ou analogues sur un ou les deux réservoirs.

7. Calorimètre selon une des revendications 1 à 6, **caractérisé en ce qu'**au moins le réservoir de dissolution (3) est réalisé dans un matériau résistant à la température et/ou aux produits chimiques, par exemple en métal, céramique et/ou matière plastique.

8. Calorimètre selon une des revendications 1 à 7, **caractérisé en ce que** le réservoir de pression (9) et/ou le réservoir isolant (11) sont en métal, céramique et/ou matière plastique.

9. Calorimètre selon une des revendications 1 à 8, **caractérisé en ce qu'**une isolation ou une enveloppe isolante est disposée sur le côté extérieur du réservoir de pression (9).

10. Calorimètre selon une des revendications 1 à 9, **caractérisé en ce qu'**au moins un moyen pour déplacer le liquide ou un agitateur (13) est prévu dans la chambre remplie de liquide incompressible ou d'eau lors de l'utilisation.

11. Calorimètre selon une des revendications 1 à 10, **caractérisé en ce que** qu'un agitateur magnétique est prévu dans la chambre remplie de liquide incompressible ou d'eau lors de l'utilisation.

12. Calorimètre selon une des revendications 1 à 11, **caractérisé en ce que** plusieurs sondes de température (8), en particulier réparties régulièrement, sont prévues dans la chambre intermédiaire disposée entre le réservoir de dissolution (3) et le réservoir de pression (9), contenant de l'eau ou un liquide incompressible lors de l'utilisation.

13. Calorimètre selon une des revendications 1 à 12, **caractérisé en ce qu'**une ou plusieurs sondes de température (16) sont disposées sur le côté extérieur du réservoir de pression (9) pour établir le bilan énergétique.

14. Calorimètre selon une des revendications 1 à 13, **caractérisé en ce qu'**au moins un dispositif de régulation thermique est prévu sur le réservoir de pression (9) pour régler une température constante de ce réservoir de pression (9).
